# EUROPÄISCHE PATENTANMELDUNG

(11) **EP 2 813 286 A1**
(43) Veröffentlichungstag der Anmeldung: **17.12.2014**
(21) Anmeldenummer: 13171415.6
(22) Anmeldetag: 11.06.2013
(51) Int. Cl.: B01J 12/00, B01J 19/00, B01J 19/24, C01C 3/02

(54) **Reaktionsrohr und Verfahren zur Herstellung von Cyanwasserstoff**

(71) Anmelder: Evonik Industries AG, 45128 Essen (DE)
(72) Erfinder: Glöckler, Bernd, 63517 Rodenbach (DE); Steffan, Martin, Dr., 64285 Darmstadt (DE); Steurenthaler, Martin, 60320 Frankfurt (DE); Müller, Thomas, 63674 Altenstadt (DE); Rigot, Nicolas, 60316 Frankfurt (DE); Krill, Steffen, Dr., 64367 Mühltal (DE); Körfer, Martin, 63796 Kahl (DE)

(57) **Zusammenfassung**

Das Reaktionsrohr umfasst ein zylindrisches Keramikrohr und einen auf der Rohrinnenwand aufgebrachten, Platin enthaltenden Katalysator, wobei das Reaktionsrohr auf der Innenwand in Längsrichtung des Rohrs verlaufende, in den Innenraum des Reaktionsrohrs reichende und mit Katalysator beschichtete Rippen aufweist. Das Reaktionsrohr eignet sich für die Herstellung von Cyanwasserstoff durch Umsetzung von Ammoniak und mindestens einem aliphatischen Kohlenwasserstoff mit 1 bis 4 Kohlenstoffatomen bei einer Temperatur von 1000 bis 1400 °C

## Beschreibung

Die Erfindung richtet sich auf ein Reaktionsrohr für die Herstellung von Cyanwasserstoff, sowie auf ein Verfahren zur Herstellung von Cyanwasserstoff unter Verwendung dieses Reaktionsrohrs.

Das BMA-Verfahren zur Herstellung von Cyanwasserstoff aus Ammoniak und einem aliphatischen Kohlenwasserstoff mit 1 bis 4 Kohlenstoffatomen wird bei Temperaturen im Bereich von 1000 °C bis 1400 °C durchgeführt. Da die Reaktion endotherm ist, muss bei dem Verfahren der Reaktionsmischung Wärme zugeführt werden. Im technischen Maßstab wird das BMA-Verfahren in von außen beheizten Reaktionsrohren durchgeführt, die auf der Rohrinnenseite mit einem Platin enthaltenden Katalysator beschichtet sind und von der gasförmigen Reaktionsmischung durchströmt werden. Die Raum-Zeit-Ausbeute in diesen technischen Reaktoren wird durch die geometrische Oberfläche des Reaktionsrohrs und die dadurch begrenzte aktive Oberfläche des platinhaltigen Katalysators bestimmt.

Aus dem Stand der Technik sind für Reaktionsrohre zum Einsatz im BMA-Verfahren Ansätze zur Vergrößerung des Oberflächen/Volumen-Verhältnisses der mit dem Katalysator beschichteten Oberfläche oder zur Erhöhung der Raum-Zeit-Ausbeute durch Änderung der Strömungsverhältnisse im Reaktionsrohr bekannt.

In DE 29 36 844 A1 wird vorgeschlagen, in dem Reaktionsrohr durch Einbauten oder Füllkörper, die ganz oder teilweise mit Katalysator belegt sein können, eine turbulente Strömung zu bewirken, um die Raum-Zeit-Ausbeute und die Ausbeute an Cyanwasserstoff zu verbessern.

Aus WO 90/13405 sind Reaktionsrohre für das BMA-Verfahren bekannt, die periodische Querschnittsänderungen des Reaktionsrohrs von einem kreisförmigen Querschnitt zu einem elliptischen Querschnitt aufweisen.

DE 41 28 201 beschreibt Reaktionsrohre für das BMA-Verfahren, die Einbauten in Form von Wendeln aufweisen, mit denen der turbulente Anteil der Strömung der Reaktionsgase erhöht wird.

Allen diesen Reaktionsrohren ist jedoch gemeinsam, dass während der Herstellung von Cyanwasserstoff in verstärktem Maß eine Verrußung der Innenflächen des Reaktionsrohrs auftritt. Der durch Zersetzung der zur Herstellung von Cyanwasserstoff eingesetzten aliphatischen Kohlenwasserstoffe gebildete Ruß schlägt sich dabei auf dem Platin enthaltenden Katalysator ab und hemmt dadurch die Bildungsreaktion von Cyanwasserstoff. Deshalb müssen häufiger Maßnahmen zur Entfernung von Rußablagerungen getroffen werden, für die die Herstellung von Cyanwasserstoff unterbrochen werden muss.

Aus DE 1 078 554 und WO 2006/050781 sind Reaktionsrohre mit innerhalb des Reaktionsrohrs in Längsrichtung des Rohrs angeordneten rohrförmigen oder stabförmigen Einbauten bekannt. Mit solchen Einbauten lässt sich zwar die Raum-Zeit-Ausbeute und die Ausbeute an Cyanwasserstoff verbessern, doch erfordern diese Einbauten einen aufwendigeren Einbau der Reaktionsrohre in den Reaktor mit Zentrierung der Einbauten im Reaktionsrohr.

Es besteht deshalb weiterhin ein Bedarf an Reaktionsrohren für die Herstellung von Cyanwasserstoff, mit denen sich im Vergleich zu den im technischen Maßstab eingesetzten zylindrischen Rohren eine bessere Raum-Zeit-Ausbeute und eine höhere Ausbeute an Cyanwasserstoff erzielen lässt, ohne dass ein zusätzlicher Aufwand bei der Herstellung und dem Einbau der Reaktionsrohre in den Reaktor erforderlich wird.

Gegenstand der Erfindung ist ein Reaktionsrohr für die Herstellung von Cyanwasserstoff, das ein zylindrisches Keramikrohr und einen auf der Rohrinnenwand aufgebrachten, Platin enthaltenden Katalysator umfasst, wobei das Reaktionsrohr auf der Innenwand in Längsrichtung des Rohrs verlaufende, in den Innenraum des Reaktionsrohrs reichende und mit Katalysator beschichtete Rippen aufweist.

Gegenstand der Erfindung ist außerdem die Verwendung des Reaktionsrohrs zur Herstellung von Cyanwasserstoff, sowie ein Verfahren zur Herstellung von Cyanwasserstoff durch Umsetzung von Ammoniak und mindestens einem aliphatischen Kohlenwasserstoff mit 1 bis 4 Kohlenstoffatomen in Gegenwart eines Platin enthaltenden Katalysators bei einer Temperatur von 1000 bis 1400 °C in dem erfindungsgemäßen Reaktionsrohr.

Das erfindungsgemäße Reaktionsrohr lässt sich in gleicher Weise wie die bekannten zylindrischen Reaktionsrohre durch Strangpressen oder Extrusion einer plastischen keramischen Masse zu einem rohrförmigen Grünkörper, Trocknen des Grünkörpers und anschließendes Kalzinieren herstellen. Bei dem Strangpressen oder der Extrusion muss lediglich an Stelle eines kreisförmigen Ringspalts ein Ringspalt mit zusätzlichen, den Rippen entsprechenden Öffnungen eingesetzt werden. Das Aufbringen des Platin enthaltenden Katalysators auf die Rohrinnenwand und die Rippen und der Einbau des Reaktionsrohrs in den Reaktor zur Herstellung von Cyanwasserstoff können in gleicher Weise wie bei den bekannten zylindrischen Reaktionsrohren erfolgen.

Das erfindungsgemäße Reaktionsrohr weist auf der Innenwand vorzugsweise 2 bis 6 Rippen auf, besonders bevorzugt 3 oder 4 Rippen und am meisten bevorzugt 4 Rippen. Die Rippen reichen vorzugsweise um mehr als das 0,1-fache des Rohrinnendurchmessers in den Innenraum des Reaktionsrohrs. In einer besonders bevorzugten Ausführungsform stoßen die Rippen in der Mitte des Reaktionsrohrs aneinander und unterteilen den Innenraum des Reaktionsrohrs in mehrere voneinander getrennte Kammern.

Die Rippen auf der Innenwand des Reaktionsrohrs weisen vorzugsweise eine mittlere Dicke auf, die das 0,25-fache bis 2,5-fache der mittleren Wanddicke des Reaktionsrohrs beträgt. Besonders bevorzugt weisen die Rippen auf der Innenwand des Reaktionsrohrs eine gleichmäßige Dicke auf, wobei besonders bevorzugt die Rippen und die Wand des Reaktionsrohrs im Wesentlichen die gleiche Dicke aufweisen.

Das erfindungsgemäße Reaktionsrohr hat eine zylindrische Form, wobei der Innendurchmesser des Rohrs vorzugsweise 10 bis 50 mm und besonders bevorzugt 15 bis 30 mm beträgt. Die Länge des Reaktionsrohrs liegt vorzugsweise im Bereich von 1000 bis 5000 mm und besonders bevorzugt im Bereich von 1500 bis 2500 mm.

Das erfindungsgemäße Reaktionsrohr besteht vorzugsweise aus einer gasdicht gesinterten Keramik und besonders bevorzugt aus gasdicht gesintertem Aluminiumoxid oder Siliziumcarbid.

Das erfindungsgemäße Reaktionsrohr ist auf der Innenseite und auf den Rippen ganz oder teilweise mit einem Platin enthaltenden Katalysator beschichtet. Vorzugsweise ist mehr als 80 % der geometrischen Oberfläche der Innenseite des Reaktionsrohrs und der Rippen mit dem Platin enthaltenden Katalysator beschichtet. Als Platin enthaltende Katalysatoren können alle für das BMA-Verfahren zu Herstellung von Cyanwasserstoff bekannten Katalysatoren eingesetzt werden. Bevorzugt werden die aus WO 2004/076351 bekannten Katalysatoren mit einer verminderten Verrußungsneigung verwendet. Die Platin enthaltenden Katalysatoren können nach allen bekannten Verfahren zum Aufbringen von solchen Katalysatoren auf Trägermaterialien auf die Innenseite des Reaktionsrohrs aufgebracht werden. Bevorzugt werden die in EP-A 0 299 175, EP-A 0 407 809 und EP-A 0 803 430 beschriebenen Verfahren zum Aufbringen des Platin enthaltenden Katalysators auf die Innenseite des Reaktionsrohrs verwendet.

Das erfindungsgemäße Reaktionsrohr lässt sich zur Herstellung von Cyanwasserstoff nach dem sogenannten BMA-Verfahren verwenden.

Bei dem erfindungsgemäßen Verfahren zur Herstellung von Cyanwasserstoff werden Ammoniak und mindestens ein aliphatischer Kohlenwasserstoff mit 1 bis 4 Kohlenstoffatomen in Gegenwart eines Platin enthaltenden Katalysators bei einer Temperatur von 1000 bis 1400 °C in mindestens einem erfindungsgemäßen Reaktionsrohr umgesetzt. Dazu wird eine Gasmischung, die Ammoniak und mindestens einen aliphatischen Kohlenwasserstoff mit 1 bis 4 Kohlenstoffatomen enthält, durch das erfindungsgemäße Reaktionsrohr geleitet und das Reaktionsrohr durch Beheizung von außen auf einer Temperatur von 1000 °C bis 1400 °C gehalten. Vorzugsweise bestehen die Kohlenwasserstoffe zu mindestens 90 Vol.-% aus Methan. Die zur Herstellung von Cyanwasserstoff eingesetzte Gasmischung enthält vorzugsweise Ammoniak in stöchiometrischem Überschuss. Bei Verwendung von Methan als Kohlenwasserstoff wird vorzugsweise ein Molverhältnis von Ammoniak zu Methan im Bereich von 1,01 : 1 bis 1,30 : 1 verwendet. Die Strömungsgeschwindigkeit der Gasmischung durch das Reaktionsrohr wird vorzugsweise so gewählt, dass sich eine im Wesentlichen laminare Strömung ausbildet.

Die Figuren zeigen Querschnitte von aus dem Stand der Technik bekannten und erfindungsgemäßen Reaktionsrohren.

Fig. 1 zeigt den Querschnitt durch ein aus dem Stand der Technik bekanntes zylindrisches Reaktionsrohr.

Fig. 2 zeigt den Querschnitt durch ein aus dem Stand der Technik bekanntes Reaktionsrohr mit einem rohrförmigen Einbau in der Rohrmitte. Zur Herstellung von Cyanwasserstoff wird die Gasmischung durch den Spalt zwischen den zwei Rohren geleitet.

Fig. 3 zeigt den Querschnitt durch ein erfindungsgemäßes Reaktionsrohr mit 4 Rippen, die nicht bis in die Mitte des Reaktionsrohrs reichen.

Fig. 4 zeigt den Querschnitt durch ein erfindungsgemäßes Reaktionsrohr mit 4 Rippen, die bis in die Mitte des Reaktionsrohrs reichen und den Innenraum des Reaktionsrohrs in 4 voneinander getrennte Kammern unterteilen.

Fig. 5 zeigt den Querschnitt durch ein erfindungsgemäßes Reaktionsrohr mit 3 Rippen, die nicht bis in die Mitte des Reaktionsrohrs reichen und deren Dicke mit zunehmendem Abstand von der Innenwand des Reaktionsrohrs abnimmt.

Die nachfolgenden Beispiele demonstrieren die vorteilhafte Wirkung eines erfindungsgemäßen Reaktionsrohrs bei der Herstellung von Cyanwasserstoff aus Ammoniak und Methan im Vergleich zu einem zylindrischen Reaktionsrohr und zu einem Reaktionsrohr mit einem rohrförmigen Einbau.

### Beispiele

### Beispiel 1 (Vergleichsbeispiel)

Ein zylindrisches Reaktionsrohr aus gesintertem Aluminiumoxid mit 2100 mm Länge und 17 mm Innendurchmesser wurde wie in Beispiel 6 von EP 0 407 809 A beschrieben mit einem platinhaltigen Katalysator beschichtet und formiert. Anschließend wurde eine Gasmischung aus 44 mol/h Ammoniak und 40 mol/h Methan bei 1280 °C von unten durch das Reaktionsrohr geleitet. Das austretende Produktgas wurde analysiert, die Ausbeute an Cyanwasserstoff betrug 79,9 % bezogen auf Ammoniak (88,8 % bezogen auf Methan).

### Beispiel 2 (Vergleichsbeispiel)

Beispiel 1 wurde wiederholt, wobei jedoch in dem Reaktionsrohr zentrisch ein von außen mit Katalysator beschichtetes Rohr aus gesintertem Aluminiumoxid mit 1200 mm Länge und 6 mm Außendurchmesser angeordnet wurde und die Gasmischung durch den Ringspalt zwischen den Rohren geleitet wurde. Die Ausbeute an Cyanwasserstoff betrug 84,4 % bezogen auf Ammoniak (93,3 % bezogen auf Methan).

### Beispiel 3

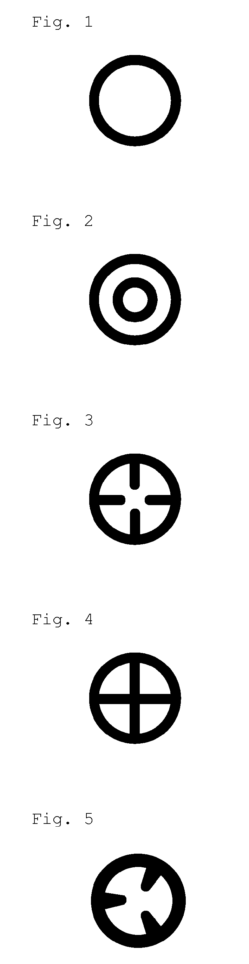

Beispiel 1 wurde wiederholt, wobei jedoch ein Reaktionsrohr mit einem Querschnitt entsprechend Fig. 3 verwendet wurde, das vier in Längsrichtung des Rohrs verlaufende und jeweils 4,5 mm in den Innenraum des Reaktionsrohrs reichende Rippen mit einer mittleren Dicke von 3 mm aufwies. Die Ausbeute an Cyanwasserstoff betrug 84,0 % bezogen auf Ammoniak (92,5 % bezogen auf Methan).

### Beispiel 4

Beispiel 1 wurde wiederholt, wobei jedoch ein Reaktionsrohr mit einem Querschnitt entsprechend Fig. 4 verwendet wurde, das vier in Längsrichtung des Rohrs verlaufende und in der Mitte des Reaktionsrohrs aneinander stoßende Rippen aufwies, die den Reaktionsraum in 4 getrennte Kammern unterteilten und deren Dicke der Wanddicke des Reaktionsrohrs entsprach. Die Ausbeute an Cyanwasserstoff betrug 90,0 % bezogen auf Ammoniak (99,0 % bezogen auf Methan).

### Beispiel 5

Beispiel 1 wurde wiederholt, wobei jedoch ein Reaktionsrohr mit einem Querschnitt entsprechend Fig. 5 verwendet wurde, das drei in Längsrichtung des Rohrs verlaufende und jeweils 4,75 mm in den Innenraum des Reaktionsrohrs reichende Rippen aufwies, deren Dicke von 3 mm an der Innenwand des Reaktionsrohrs zum Inneren des Reaktionsrohrs hin auf 2 mm abnahm. Die Ausbeute an Cyanwasserstoff betrug 84,9 % bezogen auf Ammoniak (93,7 % bezogen auf Methan).

## Patentansprüche

1. Reaktionsrohr für die Herstellung von Cyanwasserstoff umfassend ein zylindrisches Keramikrohr und einen auf der Rohrinnenwand aufgebrachten, Platin enthaltenden Katalysator,
**dadurch gekennzeichnet,**
**dass** das Reaktionsrohr auf der Innenwand in Längsrichtung des Rohrs verlaufende, in den Innenraum des Reaktionsrohrs reichende und mit Katalysator beschichtete Rippen aufweist.

2. Reaktionsrohr nach Anspruch 1,
**dadurch gekennzeichnet,**
**dass** das Reaktionsrohr 2 bis 6, vorzugsweise 3 oder 4, Rippen aufweist.

3. Reaktionsrohr nach Anspruch 1 oder 2,
**dadurch gekennzeichnet,**
**dass** die Rippen um mehr als das 0,1-fache des Rohrinnendurchmessers in den Innenraum des Reaktionsrohrs reichen.

4. Reaktionsrohr nach Anspruch 1 oder 2,
**dadurch gekennzeichnet,**
**dass** die Rippen in der Mitte des Reaktionsrohrs aneinander stoßen und den Innenraum des Reaktionsrohrs in mehrere voneinander getrennte Kammern unterteilen.

5. Reaktionsrohr nach einem der Ansprüche 1 bis 4,
**dadurch gekennzeichnet,**
**dass** die Rippen eine mittlere Dicke aufweisen, die das 0,25-fache bis 2,5-fache der mittleren Wanddicke des Reaktionsrohrs beträgt.

6. Reaktionsrohr nach einem der Ansprüche 1 bis 5,
**dadurch gekennzeichnet,**
**dass** Dicke der Rippen mit zunehmendem Abstand von der Innenwand des Reaktionsrohrs abnimmt.

7. Reaktionsrohr nach einem der Ansprüche 1 bis 6,
**dadurch gekennzeichnet,**
**dass** das Reaktionsrohr und die Rippen aus gasdicht gesintertem Aluminiumoxid oder Siliziumcarbid bestehen.

8. Verwendung eines Reaktionsrohrs nach einem der Ansprüche 1 bis 7 zur Herstellung von Cyanwasserstoff.

9. Verfahren zur Herstellung von Cyanwasserstoff durch Umsetzung von Ammoniak und mindestens einem aliphatischen Kohlenwasserstoff mit 1 bis 4 Kohlenstoffatomen in Gegenwart eines Platin enthaltenden Katalysators bei einer Temperatur von 1000 bis 1400 °C,
**dadurch gekennzeichnet,**
**dass** die Umsetzung in mindestens einem Reaktionsrohr nach einem der Ansprüche 1 bis 6 durchgeführt wird.

10. Verfahren nach Anspruch 9, **dadurch gekennzeichnet, dass** die Kohlenwasserstoffe zu mindestens 90 Vol.-% aus Methan bestehen.
